# EUROPEAN PATENT SPECIFICATION

(11) **EP 3 224 584 B1**
(45) Date of publication and mention of the grant of the patent: **04.04.2018**
(21) Application number: 15798447.7
(22) Date of filing: 24.11.2015
(51) Int. Cl.: G01J 3/02, G01J 3/28, G01J 3/453, G02B 26/10

(54) **INTERFEROMETER WITH AN OSCILLATING REFLECTOR PROVIDED BY AN OUTER SURFACE OF A SONOTRODE AND FOURIER TRANSFORM INFRARED SPECTROMETER**
INTERFEROMETER MIT EINEM OSZILLIERENDEN REFLEKTOR AUF EINER SONOTRODE UND FOURIER-TRANSFORMATION-INFRAROTSPEKTROMETER
INTERFÉROMÈTRE AVEC UN RÉFLECTEUR OSCILLANT AVEC UNE SONOTRODE ET SPECTROMÈTRE INFRAROUGE À TRANSFORMÉE DE FOURIER

(30) Priority: 24.11.2014 EP 14194520
(43) Date of publication of application: 04.10.2017
(73) Proprietor: Freie Universität Berlin, 14195 Berlin (DE)
(72) Inventor: SÜSS, Björn, 12051 Berlin (DE)
(74) Representative: Gulde & Partner
(86) International application number: PCT/EP2015/077474
(87) International publication number: WO 2016/083358

(56) References cited:
- WO-A1-2008/015390
- US-A- 3 535 024

## Description

The invention relates to an interferometer employing a reflector adapted to oscillate, and a Fourier transform spectrometer with an inventive interferometer.

### Background of the invention

Oscillating reflectors or mirrors are needed for different applications, like interferometers as disclosed in US 3,535,024 A1, and Fourier transform spectrometers, among others. Usually, oscillating reflectors are used to create a varying optical path length of an energy beam impinging on the reflector, as for instance used in interferometers in order to get access to phase information. WO 2008/015390 A1 provides a system for integrating optical interfacial elements with a high power acoustic resonator, wherein the acoustic resonator includes an acoustic horn.

Among others, oscillating reflectors are used in infrared (IR) spectroscopy. IR spectroscopy is an extremely powerful tool for the identification and characterization of molecules. It is based on the principle of the measurement of IR absorption or emission bands, which arise by an excitation of molecular vibrations of a sample. Advantageously, IR spectroscopy is a non-destructive method which provides a high degree of information about the sample, like molecular identification, configuration analysis, analysis of the chemical environment of molecules, and a temporal analysis of chemical processes.

Time-resolved measurements are of interest for kinetic processes, for example, in the investigation of combustion reactions or in biochemical reactions. The so-called FTIR spectroscopy is an extension of the IR spectroscopy. Here, a reference beam with a constant optical path interferes with a beam whose optical path length is varied by means of a planar, oscillating reflector or mirror. This structure, in which two beams with different optical path length with respect to a beam source are superimposed, is called an interferometer. In an interferometer, a sample is provided in the interference beam. An IR spectrum can be extracted from the interferogram by Fourier transformation. Compared to dispersive IR spectroscopy, this method allows a higher spectral accuracy (Connes advantage) and a better signal-to-noise ratio (Jacquinot and multiplex advantage).

The methods for time-resolved IR spectroscopy can be divided into interferometer based methods like rapid scan, step scan or stroboscopic sampling, and non interferometric, dispersive or laser based methods.

Rapid scan is a standard mode of FTIR spectroscopy. Rapid scan provides a simple measurement setup and is low error prone. It requires a movable mirror or reflector, which is moved back and forth with respect to an incident light beam thereon. During this periodic movement, the intensity is continuously measured. Rapid scan provides a time resolution of the order of 10⁻² s.

An interferogram-based method by which a higher time resolution than rapid scan can be achieved is for example step scan. In step scan, a movable mirror is held at a certain position and the variation in time of the intensity is measured. This measurement is repeated for many different positions. The time resolution of step scan is of the order of nanoseconds depending on the rise time of the detector and the employed electronics. Step scan requires extremely good stability of the entire structure and reproducibility of the measurement and no significant change in the sample over time. Otherwise, errors are introduced which cannot be detected or corrected. However, these requirements are often not met in practice, especially in biological kinetic processes.

Further known are stroboscopic measurements. In stroboscopic measurements, the mirror is moved as in rapid scan, but interferograms are measured with different time offset relative to the start of the reaction. Individual points of these shifted interferograms are assembled in retrospect such that the resulting spectrum has a higher time resolution than the period of oscillation of the movable mirror. This mode of measurement requires analogous to step scan extremely good stability and reproducibility and is therefore also impractical in practice in many cases.

In general, the conventional rapid scanning technique provides many advantages over other methods, like sensibility to changes in the environment, excitation source or sample. It is also more cost-effective and relatively "easy". A particular advantage of this method is that each sample leads to an entire interferogram. The Fourier transform is obtained from data points, which originate from the same sample. However, a disadvantage of the rapid-scan method is its limited time resolution. Specifically, the period of the oscillating movement of the mirror is a limiting factor.

Typically, the translation of the movable mirror or reflector is formed by an oscillator coil, which acts on the mirror or reflector. However, with this method, the maximum mirror speeds are however limited to values of around 6 cm/s. The reason for this is the extremely high forces necessary to accelerate the mirror. These forces increase exponentially as a function of the mirror velocity. This makes it impossible to accelerate the mirror in a sufficient way.

In the past there have been various approaches to circumvent this problem by faster mirror movements to achieve ultra rapid-scan spectrometry. It is for instance known to convert the translation movement of the mirror into a rotary movement, wherein the movement direction of the mirror does not have to be continuously reversed, so that extremely high forces can be avoided.

Instead, a disc-shaped mirror whose surface has a slight tilt is rotated. Thus, the optical path difference can be quickly varied cyclically. With this system, a time resolution could be realized up to a few milliseconds. However, in this time range frictional forces and demands on the minimization of the imbalance reach a critical level.

Therefore, there is still the need to provide oscillating reflectors or mirrors which can move quickly.

### Summary of the invention

The object of the present invention is to provide an alternative, quickly moving oscillating reflector. It is a further object of the invention to provide a FTIR spectrometer with improved time and spectral resolution.

According to the invention, this object is achieved by providing an interferometer comprising a source of a primary energy beam, a first reflector being provided static during a measurement such that a first path length from the source to the first reflector is constant during a measurement, and a reflector adapted and provided to oscillate such that a second path length from the source to the reflecting surface is variable. Further provided is a target, a means for splitting an energy beam arranged such that it divides the primary beam into a first energy beam incident onto the first reflector, and a second energy beam incident onto the reflector adapted to oscillate, and a means for combining energy beams arranged such that it combines a third energy beam reflected from the first reflector and a fourth energy beam reflected from the reflector adapted to oscillate to a fifth energy beam incident onto the target, wherein the reflector, that is adapted and provided to oscillate, is provided by an outer surface of a sonotrode. In contrast to state of the art movable mirrors where an oscillating unit is used to drive a separate mirror, here a surface of an oscillating unit, the ultrasonic resonator itself is used as a reflecting surface. In contrast to separate mirrors, the surface of the ultrasonic resonator itself is built to withstand the forces resulting from the rapid movement of the ultrasonic resonator in resonance. The inventive movable mirror allows achieving higher frequency of oscillations and thus a better time resolution when used in interferometers and spectrometers.

The inventive reflector is adapted to oscillate with respect to the direction of the second energy beam incident thereon.

The primary energy beam may be a polychromatic or monochromatic energy beam.The reflecting surface is preferably an outer surface of the ultrasonic resonator. The outer surface is preferably provided in the longitudinal direction of the ultrasonic resonator and the ultrasonic resonator oscillates in longitudinally mode. In transversal mode, due to flexing of the ultrasonic resonator itself, an outer ultrasonic resonator surface can not be directly used for reflection due to its transversal deformation. The flexing of the ultrasonic resonator in transversal mode is proportional to the amplitude of oscillation. A separate reflecting surface needs to be mounted to the ultrasonic resonator. The fixation of the separate reflecting surface leads to a significant decrement of the resonant frequency and the amplitude of the oscillation which can't be compensated. This leads to a significant decrement of the time resolution and spectral resolution. Further, in an ultrasonic resonator, a booster can not be used in transversal mode in contrast to longitudinal mode, which in comparison leads to an additional lowering of the oscillation amplitude and spectral resolution.

The reflecting surface is preferably a lapped or polished or flattened outer surface of the ultrasonic resonator. This provides a better reflection of the reflector surface. In one embodiment, to further improve the reflection, the reflecting surface of the ultrasonic resonator is provided with a reflecting layer coated or evaporated thereon. In an embodiment, a foil is fixed to an outer surface of the reflecting surface to improve the reflection.

The reflecting surface of the ultrasonic resonator is preferably of a circular shape or form.

The ultrasonic resonator is preferably a ultrasonic resonator of cylindrical shape having a length of an integer of half the resonance wavelength.

The ultrasonic resonator is a sonotrode, preferably a titanium sonotrode, steel, aluminium, glass or silicon sonotrode.

The ultrasonic resonator may have a resonance frequency above 10.000 kHz, preferably above 15.000 kHz, even more preferably above 18.000 kHz.

A cooling device may be optionally provided to cool the ultrasonic resonator. The cooling of the ultrasonic resonator or the reflecting surface of the ultrasonic resonator leads to an improved amplitude distribution and allows a higher amplitude of oscillation of the reflecting surface.

Further provided is a Fourier transform spectrometer with an inventive interferometer wherein the first reflector is a flat mirror, the means for splitting and the means for combining are provided by a beam splitter, and the target is a detector. The source of a primary beam in the Fourier transform spectrometer may be an infrared light source or a polychromatic light source.

To conclude, the use of a surface of a ultrasonic resonator as an oscillating reflector improves the time resolution significantly, exemplarily in one embodiment to a range of 13 to 26 µs and a spectral resolution of up to 4.5-9 cm⁻¹.

The use of the ultrasonic resonator as an oscillating reflector provides a solution, in which a surface can swing very fast and reliable. The presented ultra rapid scan spectrometer surpasses all previous approaches to increase the time resolution of the rapid-scan method and offers in this respect to current commercial devices by a factor of 1000. For instance, FTIR measurements in rapid scan thus become applicable for a much greater time range of fast kinetic processes. This makes IR spectroscopy applicable to completely new processes. The measurement is greatly simplified and improved in quality.

### Brief description of the drawings

The characteristics, features and advantages of this invention and the manner in which they are obtained as described above, will become more apparent and be more clearly understood in connection with the following description of exemplary embodiments, which are explained in connection with the drawings. In the drawings:
- Fig. 1: a reflector adapted to oscillate according to the invention,
- Fig. 2: an ultrasonic resonator employed in the invention,
- Fig. 3: a first embodiment of an interferometer with a reflector adapted to oscillate according to the invention,
- Fig. 4: a second embodiment of an interferometer with a reflector adapted to oscillate according to the invention,
- Fig. 5: a third embodiment of a part of an interferometer with a reflector adapted to oscillate according to the invention,
- Fig. 6: a reflecting surface of the third embodiment as shown in Fig. 5,
- Fig. 7: a quadrupole sonotrode for the third embodiment of Fig. 5,
- Fig. 8: a double sonotrode for the second embodiment of Fig. 4,
- Fig. 9: an inventive Fourier transform spectrometer according to a first embodiment of the invention,
- Fig. 10: a simultaneous measurement of an Helium-Neon laser and the interferogram of an polychromatic infrared light source in a rapid scan Fourier transform spectrometer,
- Fig. 11: an absorbance difference spectra of the integral membrane protein bacteriorhodopsin (BR) before and after light excitation, and
- Fig. 12: time course of the absorbance band changes at 1526 wavenumbers, corresponding to the C=C oscillation of the bacteriorhodopsin retinal, after light excitation.

### Detailed description of the drawings

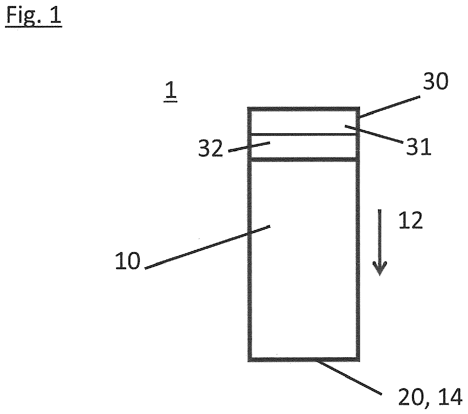

Figure 1 shows a reflector in an embodiment of the invention. The reflector 1 is adapted to oscillate. The reflector 1 comprises an ultrasonic resonator 10, an energy beam reflecting surface 20, and a means 30 for inducing oscillations in the ultrasonic resonator. The reflecting surface 20 of the inventive reflector 1 is provided by a surface of the ultrasonic resonator 10 itself. In other words, in active mode of the inventive reflector 1, the ultrasonic resonator 10 oscillates and thus its outer surfaces oscillate. One surface of the reflector 1 is then used as the reflecting surface 20 of the reflector 1 and is adapted to reflect an impinging energy beam, preferably light. Thus, in active mode the inventive reflector 1 is a moving reflector with its reflecting surface 20 oscillating. This allows the use of the inventive reflector 1 in interferometry. In interferometry, a primary beam is split up into a first beam with a constant optical path length and a second beam with a variable optical path length. Both beams are superimposed after traversal of their optical paths resulting in interference of the two beams due to the difference in their optical path lengths. Here, the inventive reflector 1 can be used for the optical path with variable path length. However, applications of the inventive reflector 1 are not limited to interferometry but to all applications were a moving or oscillating reflecting surface 20 is required.

The use of a surface of a ultrasonic resonator 10 as a moving, reflecting surface 20 of a reflector 1 has the advantage that very high oscillation frequencies in the range of kHz can be achieved while it is only necessary to provide sufficient energy to compensate for oscillation losses.

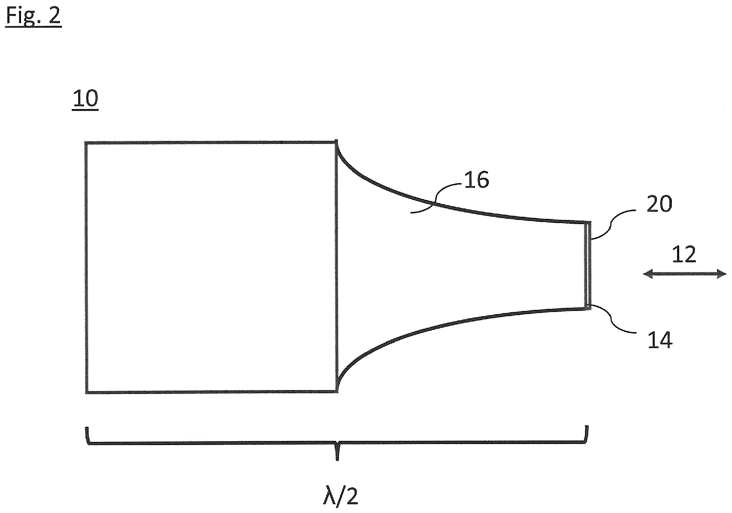

In active mode of the inventive reflector 1, i.e. when the reflector 1 is oscillating, the means 30 for inducing oscillations in the ultrasonic resonator 10 is switched on and induces oscillations in the ultrasonic resonator 10. The means 30 for inducing oscillations of the ultrasonic resonator 10 is in a preferred but not limiting embodiment comprises a power supply unit 31 and piezoelectric transducers 32 connected to the power supply 31 for inducing oscillations of or in the ultrasonic resonator 10. In one exemplarily and not limiting embodiment, the power supply unit 31, the piezoelectric transducers 32 and the ultrasonic resonator 10 are part of a so-called sonotrode. In a sonotrode, the ultrasonic resonator 10 is a tapering metal rod as shown in Fig. 2. The power unit supply 31 applies alternating current oscillations at ultrasonic frequency to the piezoelectric transducers 32. The current causes expansion or contraction of the transducers. The frequency of the current is chosen to be equivalent to the resonant frequency of the ultrasonic resonator 10. The entire metal rod of the sonotrode acts as a half-wavelength resonator, vibrating longitudinally or lengthwise with standing waves in resonant frequency. The frequencies of a sonotrode range from 20 kHz to 70 kHz with amplitudes of vibrations ranging between 10-300 µm. The ultrasonic resonator 10 of a sonotrode can be made of titanium, aluminium, steel or glass. A ultrasonic resonator 10 of a sonotrode can have different shapes, like cylindrical, square, or profiled etc. The ultrasonic resonator 10 preferably has a cylindrical symmetry.

Sometimes, only the ultrasonic resonator 10 is called a "sonotrode" and the power supply unit 31 and the piezoelectric transducers 32 are accordingly separate elements of the sonotrode. The invention also covers these embodiments. However, throughout the invention, the terms ultrasonic resonator 10 and sonotrode are used exchangeably.

Preferably, longitudinal resonance along the resonators length is used in the ultrasonic resonator 10. Transversal resonance results in smaller amplitudes of oscillations, requires more flexible ultrasonic resonators 10 and a separate friction less fixation of the ultrasonic resonator 10. Also, an ultrasonic resonator surface can not be directly used as a reflecting surface 20 due its transversal deformation. With smaller amplitudes, the spectral resolution in interferometry is disadvantageously degraded.

In an exemplary embodiment of the ultrasonic resonator 10 of a sonotrode as shown in Fig. 2, the ultrasonic resonator 10 has the form of a tapering metal rod with a horn 16. A sonotrode generally has a length of an integer of half the resonance wavelength, for instance λ/2 as shown in Fig. 2. The ultrasonic resonator 10 is swinging in its longitudinal direction 12 as shown in Fig. 2. A sonotrode may also comprise a booster mounted to the left side of the sonotrode in Fig. 2 and having a larger diameter than the sonotrode. Such boosters are known in the art and lead in combination with a sonotrode to an amplification of the amplitude of oscillation, e.g. with an amplification factor of 3. The reflecting surface 20 is the outer longitudinal surface of the ultrasonic resonator 10, being in Fig. 2 the end surface on the right of the ultrasonic resonator 10. The reflecting surface 20 may have a circular shape, for instance with a diameter of 20 mm. The diameter may vary, for instance between 15 mm to 50 mm. Exemplarily, with a resonant frequency of 20 kHz and a titanium ultrasonic resonator of a sonotrode, a 200 µm amplitude can be achieved. Its maximum velocity is approx. 45 km/h with a maximum acceleration of 160.000 g.

In a preferred embodiment as shown in Fig. 2, the reflecting surface 20 of the ultrasonic resonator 10 is optionally provided with a reflecting layer 14. The reflecting layer 14 may be coated or evaporated or otherwise deposited onto the ultrasonic resonator 10. The reflecting layer 14 may be a gold layer. However, it is also possible to lap or polish the outer surface of the ultrasonic resonator 10 to provide an improved reflecting behaviour of the reflecting surface 20.

In another embodiment, the reflector 1 is provided with a cooling device 40 not shown in the figures. The amplitude of oscillation within a reflecting surface 20 may vary depending on the position. For instance, the amplitude on the right side of the reflecting surface 20 of a ultrasonic resonator 10 may exhibit a higher amplitude than its left side. Since the speed of sound is temperature dependent, the cooling of the sonotrode by a cooling device 40 advantageously improves the amplitude distribution.

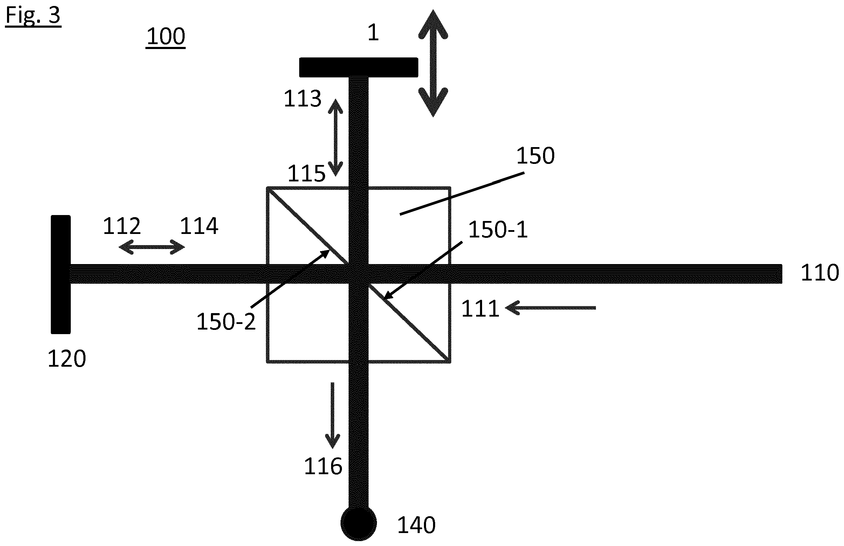

Fig. 3 shows an inventive interferometer 100 comprising the inventive reflector 1 adapted to oscillate as indicated by the large arrows in a variable length optical path and a static first reflector 120 in a constant length optical path. The energy beams reflected by the inventive reflector 1 and the first, static reflector 120 are re-combined and superimposed in beam 116 to exhibit interference at a target 140, which may be a sample or a detector connected to a sample or just a detector. Fig. 3 shows exemplarily a well-known Michelson interferometer. However, it is emphasized that any interferometer can be used were a variable length optical path is required to provide an interferogram.

In detail, the interferometer 100 of Fig. 3 exemplarily shows a source 110 of a primary energy beam 111, for instance an excitation laser with 532 nm wavelength, a first reflector 120 being provided static such that a first path length from the source 110 to the first reflector 120 is constant, and a reflector 1 according to the invention provided to oscillate such that a second path length from the source 110 to the reflecting surface 20 is variable. Further provided is a target in the optical paths from the static reflector 120 and the variable reflector 1 according to the invention. Further required are a means for splitting an energy beam 150-1 arranged such that it divides the primary beam 111 into a first energy beam 112 incident onto the first reflector 120, and a second energy beam 113 incident onto the reflector 1 adapted to oscillate, and a means for combining energy beams 150-2 arranged such that it combines a third energy beam 114 reflected from the first reflector 120 and a fourth energy beam 115 reflected from the reflector 1 adapted to oscillate incident onto the target 140. In a Michelson interferometer, a beam splitter 150 is used both as a means 150-1 for splitting the primary energy beam 111 and a means 150-2 for combining the reflected energy beams 115 and 114 onto the detector 140. The beam splitter 150 is partially reflective such that a part of the primary beam 111 is transmitted to the static first reflector 120 and another part is reflected to the inventive reflector 1 adapted to oscillate. In the reflected optical path, the fourth energy beam 115 from the inventive reflector 1 is transmitted to the detector 140 and the third energy beam 114 from the static reflector 120 is reflected to the detector 140 for interferential combination.

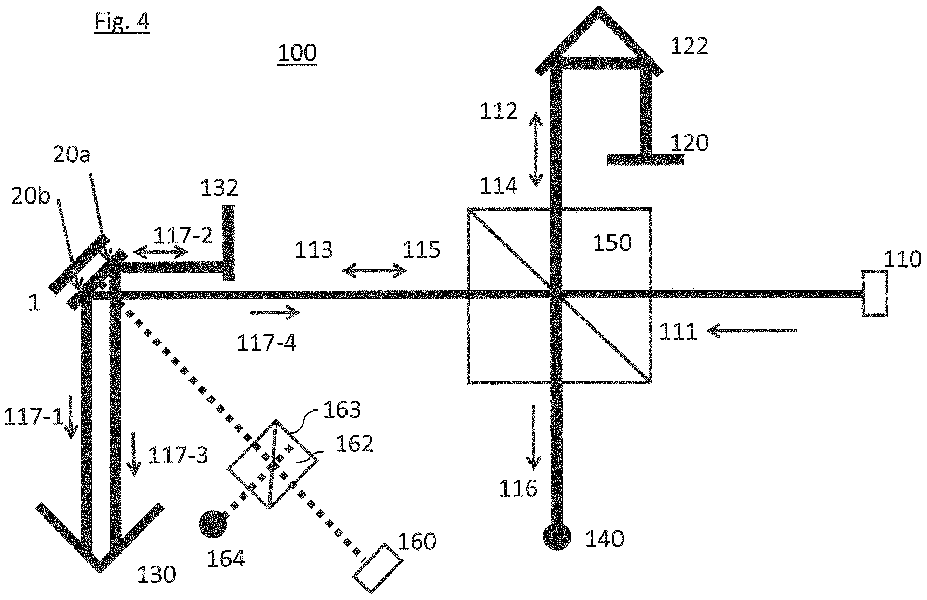

The inventive reflector 1 in the shown embodiment is thus adapted to oscillate with respect to the direction of the second energy beam 113 incident thereon. Preferably, the reflecting surface 20 of the reflector 1 is arranged perpendicular to the direction of the incident energy beam 113 and oscillates in direction of the incident energy beam 113. However, other configurations of the inventive reflector 1 with respect to the incident energy beam 113, such as a tilted arrangement with respect to the incident energy beam 113 are possible. An example will be discussed in connection with Fig. 4. The source of an energy beam 130 in Fig. 3 can be a monochromatic light source such as a laser, an infrared lamp or a polychromatic light source such as an infrared lamp.

However, the first reflector 120 may also be an object, which scatters the incident beam 112 thereon back to the means for combining 150-2. The source 110 of a primary beam 111 may be a polychromatic light source. The inventive reflector 1 adapted to oscillate would allow to receive phase information of each wavelength of the light emitted by the polychromatic light source. With one measurement, one would receive a three dimensional spectrum of the object and thus information about the three dimensional shape of the object. In an embodiment, if the object 120 is small lenses may be used to direct the beam 112 onto the object and the backscattered beam 114 back onto the means for combining 150-2 and also in the second beam path, onto the reflector adapted to oscillate 1.

Fig. 4 shows a second embodiment of an inventive interferometer 100 where the inventive reflector 1 is placed in the transmission path of the beam splitter 150 from the source of an energy beam 10 and the static reflector 120 is placed in the reflective path. In order to increase the length of the optical path and to provide shear-/tilt compensation, the path lengths are increased by a first retroreflector 130 in combination with a second static reflector 132 in relation to the inventive reflector 1 and optionally a second retroreflector 122 in the beam path of the static reflector 120. The first retroreflector 130 is positioned to receive a first reflection 117-1 from the reflector 1 adapted to oscillate and to reflect the received first reflection 117-1 antiparallel to the first reflection 117-1 onto the inventive reflector 1 adapted to oscillate for a second reflection 117-2. A second reflector 132 positioned to reflect the second reflection 117-2 back onto the inventive reflector 1 adapted to oscillate is provided for a third reflection 117-3, which follows the same optical path as the second reflection 117-2. The first retroreflector 130 is further provided to reflect the third reflection 117-3 onto the optical path of the first reflection 117-1 back onto the inventive reflector 1 adapted to oscillate for a fourth reflection 117-4.

The use of the first retroreflector 130 and the second reflector 132 increases the spectral resolution since the spectral resolution is inverse related to the optical path difference, which is increased by the first retroreflector 130 and the second reflector 132. Only an accurate adjustment of the second reflector 132 is necessary. The second reflector 132 needs to be adjusted such that the beams are antiparallel or on top of each other, respectively. The use of the first retroreflector 130 and the second reflector 132 provides compensation for tilt and shear, and allows a compensation of amplitude errors. In the embodiment of Fig. 4, the optical path difference and thus the spectral resolution is amplified by a factor of 4 in comparison to the setup in Fig. 3.

A reference energy source 160 can optionally be used to measure the position of the reflector 1 adapted to oscillate. Energy from the reference light source 160 passes a second beam splitter 162. One part of the energy of the reference energy source 160 passes the second beam splitter 162 and is directed onto the oscillating reflector 1, back to the second beam splitter 162 and onto a second detector 164. The second part of the energy of the reference energy source 160 is reflected inside the beam splitter 162 onto a mirrored surface 163 of the second beam splitter 162 and onto a second detector 164. The detector records an interference pattern of the corresponding reference light source being preferably a monochromatic light source like a laser.

The target 140 in Figs. 3 and 4 may comprise a detector connected to a sample or just a detector. In one embodiment, the detector is an optical detector (not shown). Here, due to the movement of reflector 1, the interference pattern present in the re-combined beam 116 incident on the target 140 is optically detected by the optical detector. However, also a photoacoustic detector (not shown) comprising a microphone could be used instead. In such an embodiment, using infrared light as a primary energy beam, the brightness fluctuations in the interferogram present in re-combined beam 116 impinging on the target 140 heat the target 140 and generate pressure variations in the target 140. These pressure variations can be acoustically detected by the microphone. The faster the modulation of the IR light, the higher the measured signal. In the present invention, due to the use of a rapidly moving reflecting surface 20 provided by an outer surface of a sonotrode 10, a very high signal can be produced making acoustical detection feasible.

Due to the rapid movement of the reflector 1, the interferometer 100 of the present invention belongs to the group of rapid scanning spectrometers. The signal strength is dependent on the wavelengths the primary energy beam is composed of 111, where smaller wavelengths are naturally modulated at a higher frequency.

However, in order to generate a signal strength independently of the wavelength of the primary energy beam 111, the interferometer 100 could also be used in a step scan mode of operation. Here, during a measurement, the first reflector 120 remains static and the reflector 1 adapted to oscillate oscillates only a few micrometre, preferably less than 50 µm. Usually, in step-scan mode, both reflectors 120 and 1 remain static during signal aquisition at a distinct mirror position, after signal acquisition one reflector 120 or 1 is moved to the next static mirror position while the other one remains fixed. In this way, the time dependent interferogram is measured by repetitive signal acquisition at multiple mirror positions.

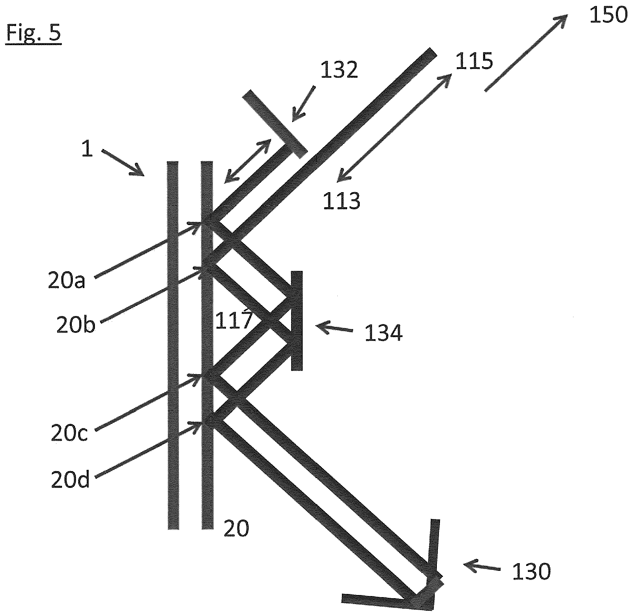

As shown in Fig. 5, in order to further increase the optical path length and to further increase the number of reflections on the inventive reflector 1, an at least one further third reflector 134 may be provided in the optical path between the first retroreflector 130 and the second reflector 132. Thus, the incident energy beam 113 is reflected on the inventive reflector 1 to the third reflector 134, back onto the inventive reflector 1, then to the retroreflector 130 back to the inventive reflector 1, onto the third reflector 134 and back again onto the inventive reflector 1, then onto the second reflector 132 and then back onto the inventive reflector 1 following the incident beam path onto the second reflector 132 until the energy beam is reflected from the inventive reflector 1 to the beam splitter 150. The use of the first retroreflector 130, the second reflector 132, and at least one third reflector 134 provides compensation for tilt and shear and allows a compensation of amplitude errors. In the embodiment of Fig. 5, the optical path difference and thus the spectral resolution is amplified by a factor of 8 in comparison to the setup in Fig. 3 or a factor of 2 in comparison to Fig. 4.

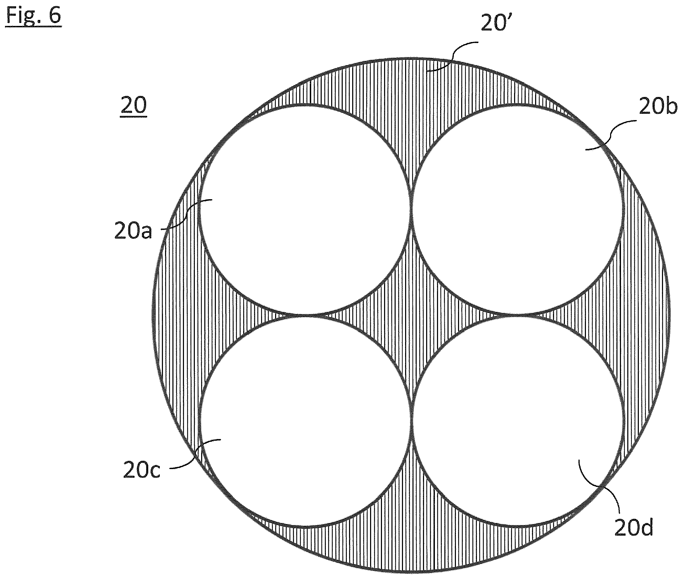

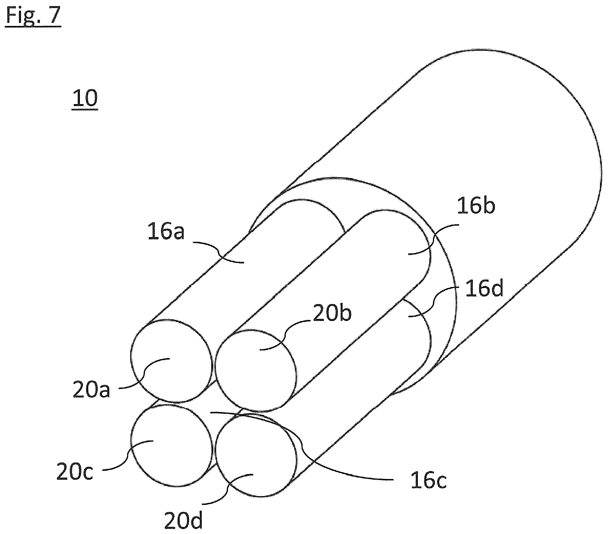

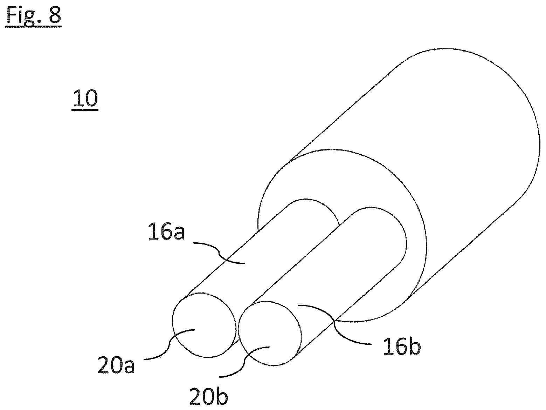

In Fig. 5, four reflecting areas 20a-20d are present on the reflecting surface 20 of the reflector 1. If energy beams with a circular cross section are used, a large amount of the reflecting surface 20 is not utilized for reflection. Fig. 6 illustrates this fact. The white circles represent the four reflecting areas 20a-20d corresponding to four impinging energy beams with circular cross sections. The shaded area 20' represents the unused area of the reflecting surface 20. Furthermore, this requires the use of a sonotrode 10 with a large circular cross section of its horn 16. Unfortunately, the larger the size of the reflecting surface 20, the more difficult it becomes to generate large oscillation amplitudes since lateral oscillations may be established. These oscillations may lead to a concavity of the reflecting surface 20 which deteriorates the reflection quality. In order to optimize the utilization of the reflecting surface 20 and to avoid lateral oscillations, separate sonotrode horns 16a-16d can be used to form four separate reflecting surfaces 20a-20d as shown in Fig. 7. The sonotrode 10 with four horns 16a-16d can be called a quadrupole sonotrode. The length of the quadrupole sonotrode is again equal to lambda/2, where lambda is the wavelength of the ultrasonic wave inside the sonotrode 10. Similarly, in Fig. 4 two reflecting areas 20a, 20b are present on the reflecting surface 20 of the reflector 1. Here, a sonotrode 10 with two ultrasonic horns 16 could be employed as shown in Fig. 8.

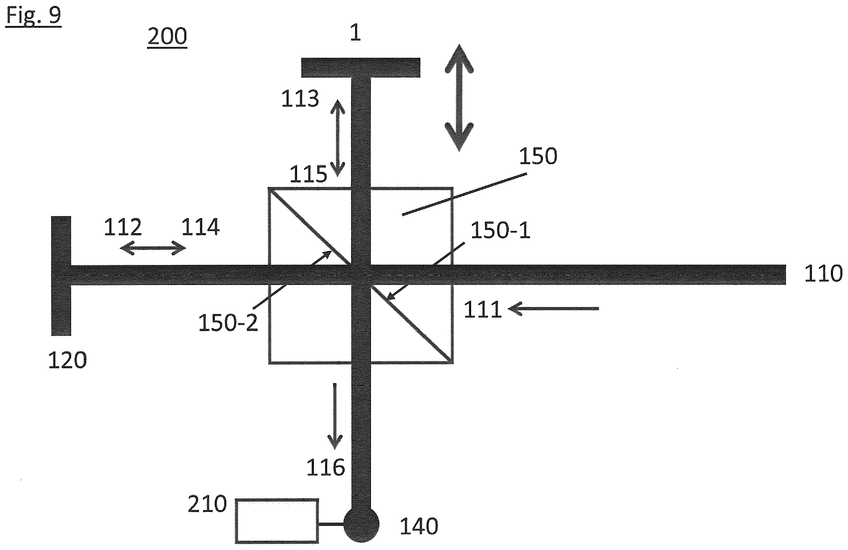

According to the invention, a Fourier transform spectrometer 200 according to Fig. 9 is provided comprising an interferometer 100 according to the invention and a means 210 for providing a Fourier transformation of the detected energy. The first reflector 120 may be a flat mirror or an object, the means for splitting 150-1 and the means for combining 150-2 are exemplarily both provided by a single beam splitter 150, the target 140 is a detector or detector array. In one embodiment, the source of a primary beam 111 in the Fourier transform spectrometer 200 may be an infrared light source or a polychromatic light source as described before with respect to Fig. 3. The means 210 for providing a Fourier transformation of the detected energy may be provided by a microprocessor and respective software. The Fourier transform spectrometer 200 of Fig. 9 is adapted to be in rapid scan mode according to the provision of the inventive reflector 1 adapted to oscillate. With an infrared light source as a source 110 of a primary beam 111, a Fourier Transform Infrared Spectrometer adapted for rapid scan mode is provided.

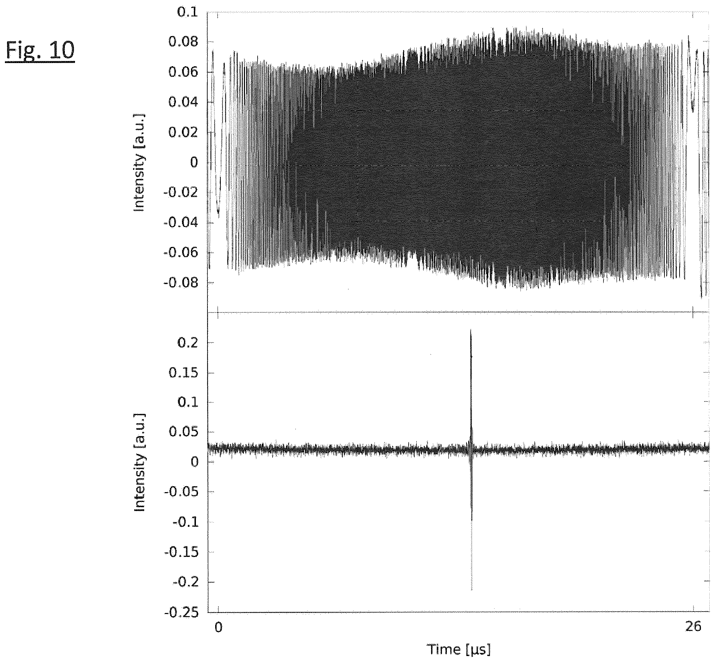

Fig. 10-12 show example measurements of a Fourier transform spectrometer according to the invention 200 with a setup of the interferometer as shown in Fig. 4.

Fig. 10 shows simultaneously measured interferograms of a monochromatic reference energy source 160 as shown in Fig. 4 (top of Fig. 10) and a polychromatic infrared primary energy source 110 (bottom of Fig. 10) in a rapid scan Fourier transform spectrometer. The reference energy source 160 is exemplarily a Helium-Neon laser. The reflector 1 adapted to oscillate is provided by a lapped surface of a titanium sonotrode oscillating at 19.3 kHz. The amplitude of oscillation of the sonotrode is 260 µm. The Helium-Neon laser interferogram in the top of Fig. 10 provides information about the position of the oscillating reflector 1. The distances covered between two zero crossings of the oscillating reflector 1 are equal. The frequency of the zero crossings in the interferogram in the top of Fig. 10 increases with increasing mirror velocity. Turning points of the oscillating reflector 1 can be seen at 0 µs and 26 µs. The maximum of the interferogram of the polychromatic primary energy source 110 in the bottom of Fig. 10 corresponds to the oscillating reflector position with all light frequencies in phase. A Fourier transformation of the recorded interferogram at equidistant points would lead to a spectrum of the primary energy source 110. The double sided interferogram as shown in Fig. 10 was recorded with a mirror retardation corresponding to 9 wavenumbers resolution of the resulting spectrum.

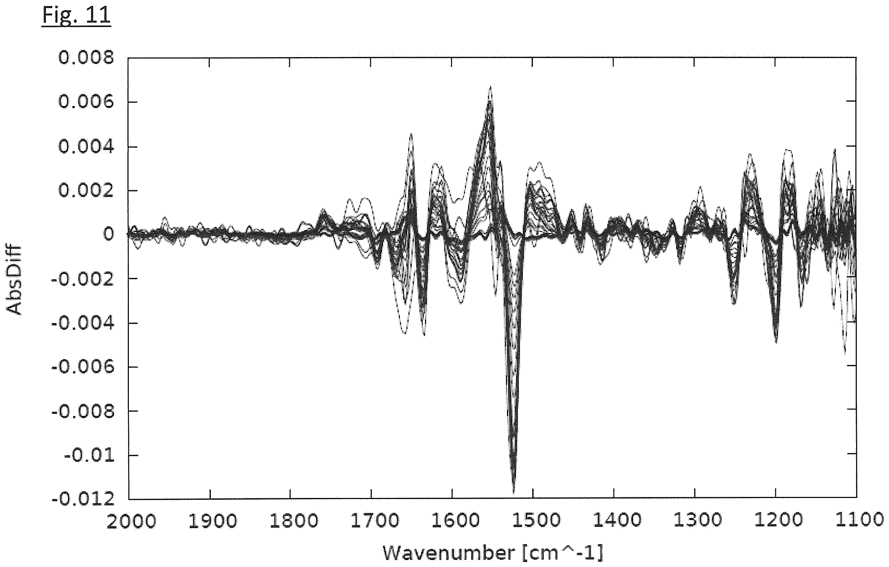

Fig. 11 shows an absorbance difference spectrum of the integral membrane protein bacteriorhodopsin (BR) before and after light excitation by an additionally and not shown excitation light source, here excitation by a 5 ns laser pulse of a frequency doubled Nd:Yag laser. The spectra are recorded every 26 µs with a spectral resolution of 12 wavenumbers. Exemplarily, 3000 spectra were averaged. The dominant band at 1526 wavenumbers in Fig. 11 corresponds to the C=C oscillation of the retinal.

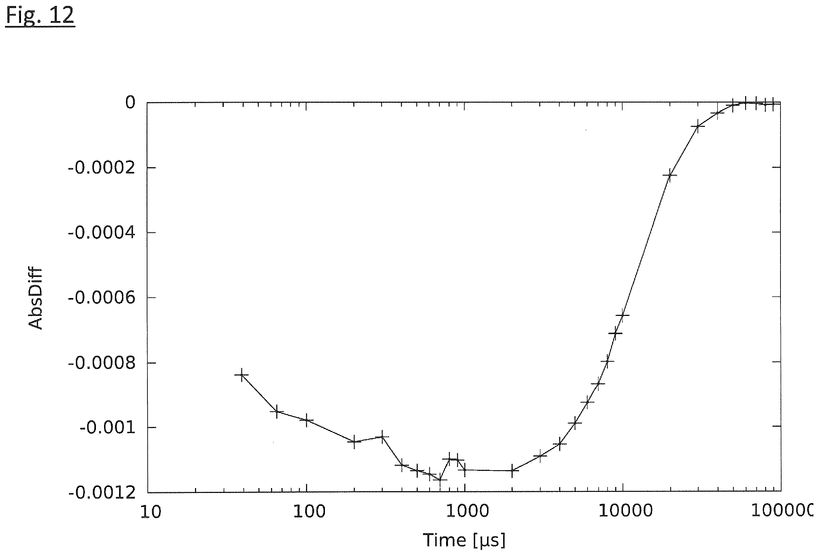

Fig. 12 shows the time course of the absorbance band changes at 1526 wavenumbers, corresponding to the C=C oscillation of the bacteriorhodopsin retinal, after light excitation. It shows the relaxation of the laser induced isomerization of the chromophore.

### List of reference signs

- 1: reflector adapted to oscillate
- 10: an ultrasonic resonator
- 12: longitudinal direction of the ultrasonic resonator
- 14: reflecting layer
- 16: horn
- 20: an energy beam reflecting surface
- 30: a means for inducing oscillations in the ultrasonic resonator
- 31: power supply unit
- 32: piezoelectric transducers
- 40: cooling device
- 100: Interferometer
- 110: primary energy source
- 111: primary energy beam
- 112: first energy beam
- 113: second energy beam
- 114: third energy beam
- 115: fourth energy beam
- 117-1: first reflection
- 117-2: second reflection
- 117-3: third reflection
- 117-4: fourth reflection
- 120: first reflector
- 122: second retroreflector
- 130: first retroreflector
- 132: second reflector
- 134: third reflector
- 140: detector
- 150: beam splitter
- 150-1: means for splitting an energy beam into two energy beams
- 150-2: means for combining energy beams to a single energy beam
- 160: reference energy source
- 162: second beam splitter
- 163: mirrored surface of second beam splitter
- 164: second detector
- 200: Fourier transform infrared spectrometer
- 210: means for providing a Fourier transformation of the detected energy

## Claims

1. Interferometer (100) comprising:
a source (110) of a primary energy beam (111),
a first reflector (120) configured to be static during signal acquisition such that a first path length from the source (110) to the first reflector (120) is constant during signal acquisition,
a reflector (1) with an energy beam reflecting surface (20), wherein the reflector (1) is provided to oscillate such that a second path length from the source (110) to the reflecting surface (20) is variable during signal acquisition,
a target (140),
a means for splitting an energy beam (150-1) arranged such that it divides the primary beam (111) into a first energy beam (112) incident onto the first reflector (120), and a second energy beam (113) incident onto the reflector (1) adapted to oscillate, and
a means for combining energy beams (150-2) arranged such that it combines a third energy beam (114) reflected from the first reflector (120) and a fourth energy beam (115) reflected from the reflector (1) adapted to oscillate incident onto the target (140),
**characterized in that**
the reflector (1) is provided by an outer surface of a sonotrode (10).

2. The interferometer (100) according to claim 1, wherein the reflector (1) is adapted to oscillate with respect to the direction of the second energy beam (113) incident thereon.

3. The interferometer (100) according to claims 1 or 2, further comprising
a first retroreflector (130) positioned to receive a first reflection (117-1) from the reflector (1) adapted to oscillate and to reflect the received first reflection (117-1) antiparallel to the first reflection (117-1) onto the reflector (1) adapted to oscillate for a second reflection (117-2), and
a second reflector (132) positioned to reflect the second reflection (117-2) back onto the reflector (1) adapted to oscillate for a third reflection (117-3) following the same optical path as the second reflection (117-2), wherein the first retroreflector (130) is further provided to reflect the third reflection (117-3) onto the optical path of the first reflection (117-1) back onto the reflector (1) adapted to oscillate for a fourth reflection (117-4).

4. The interferometer (100) according to claim 3, wherein the sonotrode (10) has two separated horns (16a, 16b), their end surfaces representing two separate reflecting surfaces (20a, 20b).

5. The interferometer (100) according to claim 3, wherein at least one further third reflector (134) is provided in the optical path between the first retroreflector (130) and the second reflector (132).

6. The interferometer (100) according to claim 5, wherein the sonotrode (10) has four separated horns (16a, 16b, 16c, 16d), their end surfaces representing four separate reflecting surfaces (20a, 20b, 20c, 20d).

7. The interferometer (100) according to one of the previous claims, wherein the reflecting surface (20) of the reflector (1) is an outer surface of the sonotrode (10) provided in longitudinal direction (12) of the sonotrode (10), and the sonotrode (10) is configured to oscillate longitudinally.

8. The interferometer (100) according to one of the previous claims, wherein the reflecting surface (20) of the reflector (1) is:
a lapped surface of the sonotrode (10), or
a surface of the sonotrode (10) provided with a reflecting layer (14) coated or evaporated thereon.

9. The interferometer (100) according to one of the previous claims, wherein the reflecting surface (20) is of circular form.

10. The interferometer (100) according to one of the previous claims, wherein the sonotrode (10) is of cylindrical shape having a length of half the wavelength of its resonance frequency.

11. The interferometer (100) according to one of the previous claims, wherein a cooling device (40) is provided to cool the sonotrode (10).

12. The interferometer (100) according to one of the previous claims, wherein for a step scan mode of the interferometer (100), the first reflector (120) is further configured to be movable between signal acquisitions such that the first path length can be varied between different measurements and the reflector (1) provided to oscillate oscillates less than 50 µm during signal acquisition.

13. Fourier transform spectrometer (200), comprising:
an interferometer (100) according to one of the previous claims 1 to 12 and
a means (210) for providing a Fourier transformation of the combined energy beams.

14. Fourier transform spectrometer (200) according to claim 13, wherein
the first reflector (120) is a flat mirror,
the means for splitting (150-1) and the means for combining (150-2) are both provided by a single beam splitter (150), and
the source (110) of a primary beam (111) is a monochromatic light source, preferably an infrared light source.

15. Fourier transform spectrometer (200) according to claim 13, wherein
the first reflector (120) is an object,
the means for splitting (150-1) and the means for combining (150-2) are both provided by a single beam splitter (150), and
the source (110) of a primary beam (111) is a polychromatic light source.

## Patentansprüche

1. Interferometer (100), umfassend:
eine Quelle (110) eines Primärenergiestrahls (111),
einen ersten Reflektor (120), der dazu gestaltet ist, während der Signalerfassung statisch zu sein, sodass eine erste Weglänge von der Quelle (110) zum ersten Reflektor (120) während der Signalerfassung konstant ist,
einen Reflektor (1) mit einer den Energiestrahl reflektierenden Oberfläche (20), wobei der Reflektor (1) dazu bereitgestellt ist, so zu oszillieren, dass eine zweite Weglänge von der Quelle (110) zur reflektierenden Oberfläche (20) während der Signalerfassung variabel ist,
ein Ziel (140),
ein Mittel zum Aufspalten eines Energiestrahls (150-1), das so angeordnet ist, dass es den Primärstrahl (111) in einen auf den ersten Reflektor (120) treffenden ersten Energiestrahl (112) und einen auf den zum Oszillieren eingerichteten Reflektor (1) treffenden zweiten Energiestrahl (113) teilt, und
ein Mittel zum Kombinieren von Energiestrahlen (150-2), das so angeordnet ist, dass es einen vom ersten Reflektor (120) reflektierten dritten Energiestrahl (114) und einen von dem zum Oszillieren eingerichteten Reflektor (1) reflektierten vierten Energiestrahl (115), auf das Ziel (140) gerichtet kombiniert,
**dadurch gekennzeichnet, dass**
der Reflektor (1) durch eine Außenfläche einer Sonotrode (10) bereitgestellt ist.

2. Interferometer (100) nach Anspruch 1, wobei der Reflektor (1) dazu angepasst ist, in Bezug auf die Richtung des darauf treffenden zweiten Energiestrahls (113) zu oszillieren.

3. Interferometer (100) nach Anspruch 1 oder 2, ferner umfassend
einen ersten Retroreflektor (130), der positioniert ist, um eine erste Reflexion (117-1) von dem zum Oszillieren angepassten Reflektor (1) zu empfangen und für eine zweite Reflexion (117-2) die empfangene erste Reflexion (117-1) antiparallel zur ersten Reflexion (117-1) auf den zum Oszillieren angepassten Reflektor (1) zu reflektieren, und
einen zweiten Reflektor (132), der positioniert ist, um für eine dritte Reflexion (117-3), die demselben optischen Weg wie die zweite Reflexion (117-2) folgt, die zweite Reflexion (117-2) zurück auf den zum Oszillieren angepassten Reflektor (1) zu reflektieren, wobei der erste Retroreflektor (130) ferner dazu bereitgestellt ist, für eine vierte Reflexion (117-4) die dritte Reflexion (117-3) auf den optischen Weg der ersten Reflexion (117-1) zurück auf den zum Oszillieren angepassten Reflektor (1) zu reflektieren.

4. Interferometer (100) nach Anspruch 3, wobei die Sonotrode (10) zwei getrennte Hörner (16a, 16b) aufweist, deren Endflächen zwei getrennte reflektierende Oberflächen (20a, 20b) darstellen.

5. Interferometer (100) nach Anspruch 3, wobei im optischen Weg zwischen dem ersten Retroreflektor (130) und dem zweiten Reflektor (132) zumindest ein weiterer dritter Reflektor (134) bereitgestellt ist.

6. Interferometer (100) nach Anspruch 5, wobei die Sonotrode (10) vier getrennte Hörner (16a, 16b, 16c, 16d) aufweist, deren Endflächen vier getrennte reflektierende Oberflächen (20a, 20b, 20c, 20d) darstellen.

7. Interferometer (100) nach einem der vorangehenden Ansprüche, wobei die reflektierende Oberfläche (20) des Reflektors (1) eine Außenfläche der Sonotrode (10) ist, die in Längsrichtung (12) der Sonotrode (10) bereitgestellt ist, und wobei die Sonotrode (10) dazu gestaltet ist, längs zu oszillieren.

8. Interferometer (100) nach einem der vorangehenden Ansprüche, wobei die reflektierende Oberfläche (20) des Reflektors (1)
eine geläppte Oberfläche der Sonotrode (10) oder
eine Oberfläche der Sonotrode (10), die mit einer darauf aufgetragenen oder aufgedampften reflektierenden Schicht (14) bereitgestellt ist, ist.

9. Interferometer (100) nach einem der vorangehenden Ansprüche, wobei die reflektierende Oberfläche (20) kreisförmig ist.

10. Interferometer (100) nach einem der vorangehenden Ansprüche, wobei die Sonotrode (10) zylinderförmig ist und eine Länge der halben Wellenlänge ihrer Resonanzfrequenz aufweist.

11. Interferometer (100) nach einem der vorangehenden Ansprüche, wobei eine Kühlvorrichtung (40) zum Kühlen der Sonotrode (10) bereitgestellt ist.

12. Interferometer (100) nach einem der vorangehenden Ansprüche, wobei für einen Step-Scan-Modus des Interferometers (100) der erste Reflektor (120) ferner dazu gestaltet ist, zwischen Signalerfassungen bewegbar zu sein, sodass die erste Weglänge zwischen verschiedenen Messungen variiert werden kann, und der zum Oszillieren bereitgestellte Reflektor (1) während der Signalerfassung weniger als 50 µm oszilliert.

13. Fourier-Transformations-Spektrometer (200), umfassend:
ein Interferometer (100) nach einem der vorangehenden Ansprüche 1 bis 12 und
ein Mittel (210) zum Bereitstellen einer Fouriertransformation der kombinierten Energiestrahlen.

14. Fourier-Transformations-Spektrometer (200) nach Anspruch 13, wobei
der erste Reflektor (120) ein ebener Spiegel ist,
das Mittel zum Aufspalten (150-1) und das Mittel zum Kombinieren (150-2) beide durch einen einzigen Strahlenteiler (150) bereitgestellt sind und
die Quelle (110) eines Primärstrahls (111) eine monochromatische Lichtquelle, vorzugsweise eine Infrarotlichtquelle, ist.

15. Fourier-Transformations-Spektrometer (200) nach Anspruch 13, wobei
der erste Reflektor (120) ein Objekt ist,
das Mittel zum Aufspalten (150-1) und das Mittel zum Kombinieren (150-2) beide durch einen einzigen Strahlenteiler (150) bereitgestellt sind und
die Quelle (110) eines Primärstrahls (111) eine polychromatische Lichtquelle ist.

## Revendications

1. Interféromètre (100), comprenant :
une source (110) d'un faisceau d'énergie primaire (111),
un premier réflecteur (120) prévu pour être statique pendant une acquisition de signal, de telle manière qu'une première longueur de trajet de la source (110) au premier réflecteur (120) est constante pendant l'acquisition du signal,
un réflecteur (1) avec une surface de réflexion de faisceau d'énergie (20), ledit réflecteur (1) étant prévu pour osciller de telle manière qu'une deuxième longueur de trajet de la source (110) à la surface de réflexion (20) est variable pendant l'acquisition du signal,
une cible (140),
un moyen de division d'un faisceau d'énergie (150-1) dispose de manière à diviser le faisceau primaire (111) en un premier faisceau d'énergie (112) incident sur le premier réflecteur (120), et en un deuxième faisceau d'énergie (113) incident sur le réflecteur (1) installé pour osciller, et
un moyen de combinaison de faisceaux d'énergie (150-2) disposé de manière à combiner un troisième faisceau d'énergie (114) réfléchi par le premier réflecteur (120) et un quatrième faisceau d'énergie (115) réfléchi par le réflecteur (1) installé pour osciller et pointée sur la cible (140),
**caractérisé en ce que**
le réflecteur (1) est réalisé par une surface extérieure d'une sonotrode (10).

2. Interféromètre (100) selon la revendication 1, où le réflecteur (1) est prévu pour osciller par rapport à la direction du deuxième faisceau d'énergie (113) qui lui est incident.

3. Interféromètre (100) selon la revendication 1 ou la revendication 2, comprenant en outre
un premier rétroréflecteur (130) disposé de manière à recevoir une première réflexion (117-1) du réflecteur (1) prévu pour osciller et pour réfléchir la première réflexion (117-1) reçue anti-parallèlement à la première réflexion (117-1) vers le réflecteur (1) prévu pour osciller afin d'obtenir une deuxième réflexion (117-2), et
un deuxième réflecteur (132) disposé de manière à rétroréfléchir la deuxième réflexion (117-2) vers le réflecteur (1) prévu pour osciller afin d'obtenir une troisième réflexion (117-3) suivant le même trajet optique que la deuxième réflexion (117-2), le premier rétroréflecteur (130) étant en outre prévu pour rétroréfléchir la troisième réflexion (117-3) sur le trajet optique de la première réflexion (117-1) vers le réflecteur (1) prévu pour osciller afin d'obtenir une quatrième réflexion (117-4).

4. Interféromètre (100) selon la revendication 3, où la sonotrode (10) a deux cornes (16a, 16b) séparées dont les surfaces d'extrémité représentent deux surfaces de réflexion (20a, 20b) séparées.

5. Interféromètre (100) selon la revendication 3, où au moins un troisième réflecteur (134) est prévu sur le trajet optique entre le premier rétroréflecteur (130) et le deuxième réflecteur (132).

6. Interféromètre (100) selon la revendication 5, où la sonotrode (10) a quatre cornes (16a, 16b, 16c, 16d) séparées dont les surfaces d'extrémité représentent quatre surfaces de réflexion (20a, 20b, 20c, 20d) séparées.

7. Interféromètre (100) selon l'une des revendications précédentes, où la surface de réflexion (20) du réflecteur (1) est une surface extérieure de la sonotrode (10) prévues dans le sens de la longueur (12) de la sonotrode (10), et où la sonotrode (10) est prévue pour osciller longitudinalement.

8. Interféromètre (100) selon l'une des revendications précédentes, où la surface de réflexion (20) du réflecteur (1) est :
une surface polie de la sonotrode (10), ou
une surface de la sonotrode (10) pourvue d'une couche réfléchissante (14) revêtue ou déposée en phase vapeur sur celle-ci.

9. Interféromètre (100) selon l'une des revendications précédentes, où la surface de réflexion (20) est de forme circulaire.

10. Interféromètre (100) selon l'une des revendications précédentes, où la sonotrode (10) est de forme cylindrique avec une longueur équivalant à la moitié de la longueur d'onde de sa fréquence de résonance.

11. Interféromètre (100) selon l'une des revendications précédentes, où un dispositif de refroidissement (40) est prévu pour refroidir la sonotrode (10).

12. Interféromètre (100) selon l'une des revendications précédentes, où, pour un mode de balayage graduel dudit interféromètre (100), le premier réflecteur (120) est en outre prévu pour être déplaçable entre des acquisitions de signal, de telle manière que la première longueur de trajet peut être variée entre différentes mesures, et où le réflecteur (1) prévu pour osciller oscille moins de 50 µm pendant une acquisition de signal.

13. Spectromètre à transformée de Fourier (200), comprenant :
un interféromètre (100) selon l'une des revendications 1 à 12 et
un moyen (210) de génération d'une transformée de Fourier des faisceaux d'énergie combinés.

14. Spectromètre à transformée de Fourier (200) selon la revendication 13, où le premier
réflecteur (120) est un miroir plan,
le moyen de division (150-1) et le moyen de combinaison (150-2) sont réalisés les deux par un seul diviseur de faisceau (150), et
où la source (110) d'un faisceau primaire (111) est une source de lumière monochrome, préférentiellement une source de lumière infrarouge.

15. Spectromètre à transformée de Fourier (200) selon la revendication 13, où
le premier réflecteur (120) est un objet,
le moyen de division (150-1) et le moyen de combinaison (150-2) sont réalisés les deux par un seul diviseur de faisceau (150), et
où la source (110) d'un faisceau primaire (111) est une source de lumière polychrome.
